# EUROPÄISCHE PATENTSCHRIFT

(11) **EP 1 334 248 B1**
(45) Veröffentlichungstag und Bekanntmachung des Hinweises auf die Patenterteilung: **21.09.2005**
(21) Anmeldenummer: 01965070.4
(22) Anmeldetag: 06.07.2001
(51) Int. Cl.: E04C 2/04

(54) **GIPSKARTONPLATTE**
GYPSUM PLASTER BOARD
PLAQUE DE PAREMENT EN PLATRE

(30) Priorität: 08.07.2000 DE 10033373
(43) Veröffentlichungstag der Anmeldung: 13.08.2003
(60) Teilanmeldung: 04025360.1
(73) Patentinhaber: Richter-System GmbH & Co. KG, 64347 Griesheim (DE)
(72) Erfinder: KNAUF, Alfons, Jean, 64343 Griesheim (DE)
(74) Vertreter: Reiser, Tonio Andreas
(86) Internationale Anmeldenummer: PCT/EP2001/007754
(87) Internationale Veröffentlichungsnummer: WO 2002/004760

(56) Entgegenhaltungen:
- WO-A1-00/08271
- GB-A- 1 053 333
- US-A- 2 308 942

## Beschreibung

Die Erfindung betrifft eine Gipskartonplatte nach dem Oberbegriff von Anspruch 1.

Eine solche Gipskartonplatte, welche an ihrer Rückseite verlaufende Stege aufweist, ist aus der US 2,308,942 A bekannt. Die vorbekannte Gipskartonplatte weist einen zweischichtigen Aufbau auf, wobei eine der Schichten schwalbenschwanzförmige Verbindungsnuten aufweist.

Gipskartonplatten werden in großem Umfang für unterschiedliche Zwecke im Bauwesen eingesetzt. Insbesondere dienen Gipskartonplatten auch zur Errichtung von Trennwänden in Trockenbauweise, wobei die Gipskartonplatten einlagig oder doppellagig beiderseits an einem Traggerüst angebracht werden, das beispielsweise aus metallischen C-Profilschienen besteht.

Weitere vorbekannte Gipskartonplatte sind aus der GB-A-1 053 333 und der WO 00/08271 bekannt. Diese weisen jeweils an ihrer Innenseite ausgebildete Vorsprünge auf.

Die Schallübertragungseigenschaften einer so aufgebauten Trennwand werden im wesentlichen durch die Schallübertragung von der einen Wandschale über das Traggerüst in die andere Wandschale bestimmt. Die üblichen Maßnahmen zur Verringerung der Schallübertragung konzentrieren sich darauf, die Schallübertragung in den Ständerprofilen und Riegelprofilen des Traggerüsts zu verringern, beispielsweise dadurch, dass die Ständer und Riegel jeweils aus zwei Profilschienen bestehen, die über schalldämmendes Material miteinander verbunden sind. Der hierfür erforderliche Aufwand ist verhältnismäßig hoch.

Aufgabe der Erfindung ist es, eine Gipskartonplatte der eingangs genannten Gattung so auszubilden, dass die Schallübertragung von der Gipskartonplatte zu einem daran anliegenden Bauteil, beispielsweise einer Profilschiene, verringert wird.

Diese Aufgabe wird mit den Merkmalen des Anspruchs 1 gelöst.

Das an die Gipskartonplatte anzuschließende Bauteil, insbesondere eine Profilschiene eines Ständers oder Riegels des Traggerüsts einer Trennwand, liegt dabei nicht vollflächig an der Außenseite der Gipskartonplatte an, sondern nur an den Vorsprüngen, so dass die Anlagefläche wesentlich verringert ist. Diese wesentliche Verringerung der Anlagefläche führt zu einer erheblichen Verminderung der Schallübertragung. Damit lassen sich Trennwände mit wesentlich verbesserten Schalldämmeigenschaften errichten, ohne dass hierfür aufwendige und kostspielige Maßnahmen im Bereich der Ständer und Riegel des Traggerüsts erforderlich würden.

Auch beim Aufbau einer doppellagigen Wandschale, die aus zwei aufeinanderliegenden Gipskartonplatten besteht, ergibt sich eine erhebliche Verbesserung der Schalldämmung, wenn mindestens eine der miteinander verbunden Gipskartonplatten in der Außenseite, in der die andere Gipskartonplatte anliegt, die erfindungsgemäßen Vorsprünge aufweist, so dass auch dort der Flächenanteil der für die Schallübertragung wirksamen Flächen wesentlich verringert wird.

Vorteilhafte Ausgestaltungen des Erfindungsgedankens sind Gegenstand der Unteransprüche.

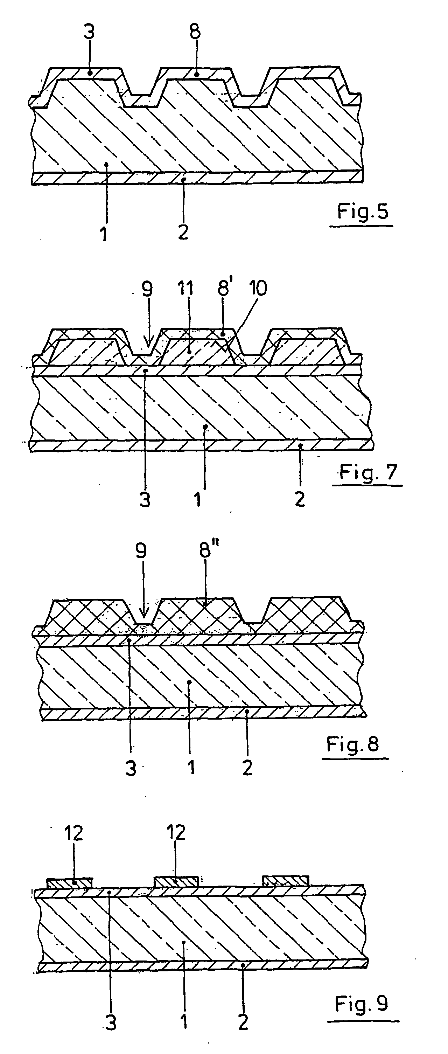

Nachfolgend werden Ausführungsbeispiele näher erläutert, wobei die beanspruchte Erfindung in Figur 7 dargestellt ist. Es zeigt:
Fig. 1-4 in räumlicher Darstellungsweise jeweils eine Gipskartonplatte mit Vorsprüngen an ihrer einen Außenfläche,
Fig. 5 einen vergrößerten Teilschnitt längs der Linie V-V in Fig. 4,
Fig. 6 eine weitere abgewandelte Ausführungsform einer Gipskartonplatte in einer räumlichen Teildarstellung,
Fig. 7-9 in Schnittdarstellungen ähnlich der Fig. 4 jeweils abgewandelte Ausführungsformen einer Gipskartonplatte und
Fig. 10 und 11 in räumlichen Darstellungen entsprechend den Fig. 1-4 die Verbindung von jeweils zwei Gipskartonplatten.

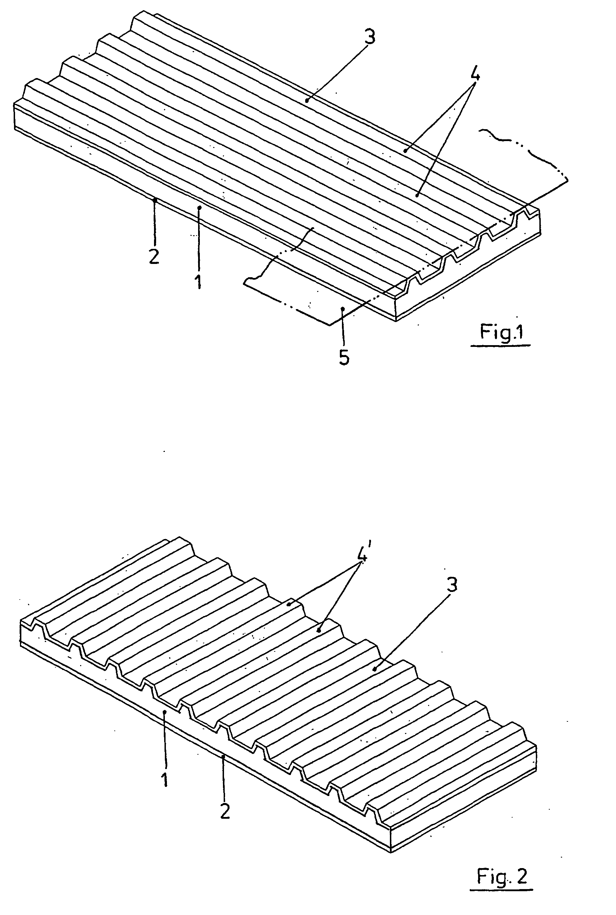

Die in der Fig. 1 dargestellte Gipskartonplatte weist eine aus Gips bestehende Kernschicht 1 auf, die beiderseits jeweils mit einer Kartonlage 2 bzw. 3
versehen ist. Die Kartonlage 2 ist glatt. Die Kartonlage 3 weist streifenförmige Erhebungen 4 auf, die in Längsrichtung der rechteckigen Kartonlage 3 verlaufen. Die streifenförmigen Erhebungen 4 bilden an der einen Außenseite der Gipskartonplatte regelmäßig angeordnete Vorsprünge, deren Außenflächen in einer gemeinsamen, in Fig. 1 mit strichpunktierten Linien angedeuteten Ebene 5 liegen.

Hiervon unterscheidet sich das Ausführungsbeispiel nach Fig. 2 nur dadurch, daß die streifenförmigen Erhebungen 4' der einen Kartonlage 3 in Querrichtung der rechteckigen Kartonlage 3 und damit auch der Gipskartonplatte verlaufen.

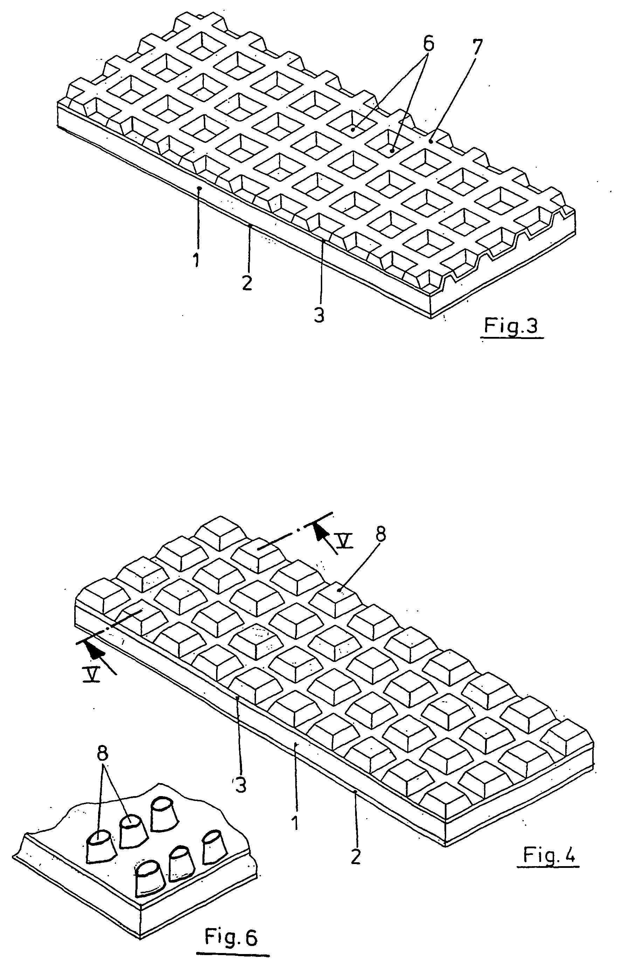

Die in Fig. 3 gezeigte Gipskartonplatte weist in ihrer einen Kartonlage 3 an ihrer Außenseite einzelne, rasterartig angeordnete Vertiefungen 6 auf. Das zwischen den Vertiefungen 6 verbleibende Flächengitter 7 bildet hierbei die Vorsprünge.

Beim Ausführungsbeispiel nach Fig. 4 werden die Vorsprünge durch einzelne, rasterartig angeordnete Erhebungen 8 der einen Kartonlage 3 gebildet. Diese Erhebungen 8 sind beim Ausführungsbeispiel nach Fig. 4 als Pyramidenstümpfe mit vorzugsweise quadratischer Grundfläche ausgeführt.

Fig. 6 zeigt, daß die Erhebungen 8 beispielsweise auch als Kegelstümpfe ausgebildet sein können.

Wie man aus der Schnittdarstellung in Fig. 5 erkennt, sind die Erhebungen 8 unter Beibehaltung einer zumindest angenähert gleichbleibenden Kartondicke durch Verformung der Kartonlage 3 gebildet. Sie stellen einzelne, tief gezogene Näpfe in der Kartonlage 3 dar. In gleicher Weise können auch die Vertiefungen 6 des Ausführungsbeispiels nach Fig. 3 durch napfartig tief gezogene Vertiefungen gebildet werden.

Bei den Ausführungen nach den Fig. 7 und 8 sind die beiden Kartonlagen 2 und 3 beiderseits der Kernschicht 1 wie bei herkömmlichen Gipskartonplatten eben ausgeführt. Die eine Kartonschicht 3 trägt eine aufgeklebte oder aufkaschierte Decklage 9, an der die Vorsprünge 8 bzw. 8' Ausgebildet sind. Während bei der Ausführung nach Fig. 8 die Decklage 9 eine die Vorsprünge 8" bildende Oberseite und eine glatte, mit der Kartonlage 3 verbundene Unterseite aufweist, bildet die Decklage 9 bei der Ausführung nach Fig. 7 eine die Vorsprünge 8' bildende Oberseite und eine Unterseite mit den Vorsprüngen 8' jeweils entsprechenden Vertiefungen 10. Diese Vertiefungen 10 können Hohlräume bilden oder - wie in Fig. 7 gezeigt - mit einem vorzugsweise schalldämmenden Material 11 ausgefüllt sein.

Bei der in Fig. 9 gezeigten Ausführung einer Gipskartonplatte mit zwei glatten, ebenen Kartonlagen 2 und 3 werden die Vorsprünge an der einen Außenseite der Gipskartonplatte durch auf die Kartonlage 3 aufgeklebte Flächenstücke 12 gebildet.

Allen dargestellten Ausführungsformen ist gemeinsam, daß die Außenfläche der Vorsprünge in einer gemeinsamen Ebene 5 liegen, wie dies in Fig. 1 angedeutet ist. In dieser Ebene 5 folgt die Anlage an dem anzuschließenden Bauteil, beispielsweise einer C-Profilschiene eines Ständers oder Riegels eines Traggerüsts einer Trennwand.

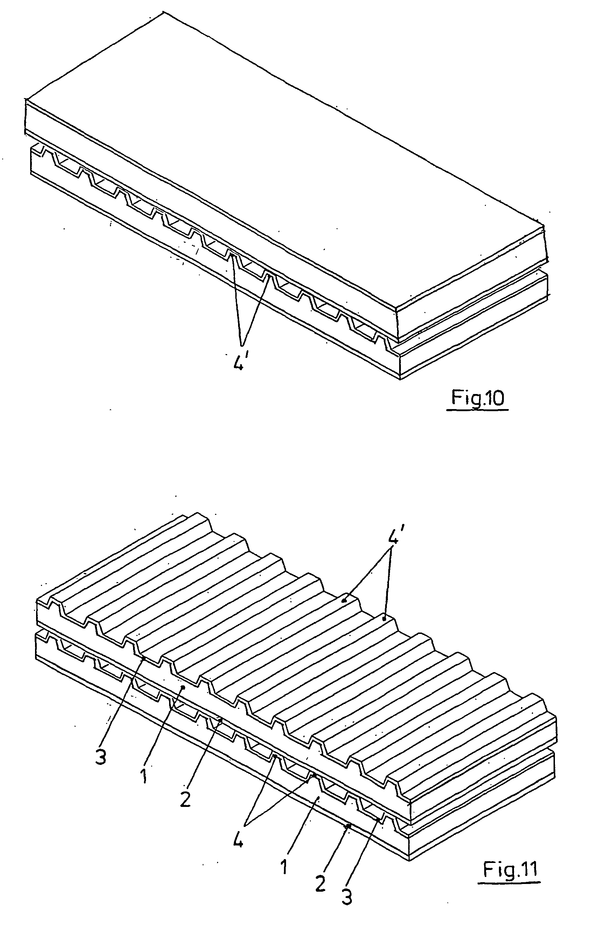

In Fig. 10 ist die Verbindung der in Fig. 2 dargestellten Gipskartonplatte mit querverlaufenden streifenförmigen Erhebungen 4' mit einer herkömmlichen, glatten Gipskartonplatte gezeigt. Eine so aufgebaute doppellagige Wandschale weist einen erhöhten inneren Schallübergangswiderstand auf, weil auch hierbei die Berührungsflächen zwischen den beiden Gipskartonplatten verringert sind.

Abweichend hiervon zeigt Fig. 11 die Verbindung von zwei Gipskartonplatten gemäß Fig. 2, wobei somit auch die obere Gipskartonplatte die beschriebenen streifenförmigen Erhebungen 4' aufweist, mit denen die so gebildete doppellagige Wandschale am Traggerüst befestigt wird. Durch Verringerung der Übertragungsflächen ist hierbei die Schallübertragung sowohl zwischen den beiden Gipskartonplatten als auch beim Übergang in das Traggerüst verringert.

## Patentansprüche

1. Gipskartonplatte mit einer aus Gips bestehenden Kernschicht (1), die beiderseits jeweils mit einer Kartonlage (2, 3) versehen ist, wobei die Gipskartonplatte an mindestens einer Außenseite regelmäßig angeordnete Vorsprünge (8') aufweist, deren Außenflächen in einer gemeinsamen Ebene (5) liegen, wobei eine der Kartonlagen (2, 3) eine Decklage (9) trägt, an der die Vorsprünge (8') ausgebildet sind, und wobei die Decklage (9) eine die Vorsprünge (8') bildende Oberseite aufweist, **dadurch gekennzeichnet, dass** die Decklage eine mit der kartonlage (2, 3) verbundene Unterseite mit den Vorsprüngen (8') entsprechenden Vertiefungen (10) aufweist.

2. Gipskartonplatte nach Anspruch 1, **dadurch gekennzeichnet, dass** die Vertiefungen (10) Hohlräume bilden.

3. Gipskartonplatte nach Anspruch 1, **dadurch gekennzeichnet, dass** die Vertiefungen (10) mit einem vorzugsweise schalldämmenden Material (11) ausgefüllt sind.

4. Gipskartonplatte nach einem der Ansprüche 1 bis 3, **dadurch gekennzeichnet, dass** die Decklage (9) auf die Kartonlagen (2, 3) aufgeklebt oder aufkaschiert ist.

## Claims

1. Plasterboard having a core layer (1) which comprises gypsum plaster and is provided on each side with a paperboard layer (2, 3), with the plasterboard having regularly arranged projections (8') whose outer surfaces lie in a common plane (5) on at least one external side of the plasterboard, with one of the paperboard layers (2, 3) bearing a covering layer (9) on which the projections (8') are formed, and with the covering layer (9) having an upper side forming the projections (8'), **characterized in that** the covering layer has an underside which has depressions (10) corresponding to the projections (8') and is joined to the paperboard layer (2, 3).

2. Plasterboard according to Claim 1, **characterized in that** the depressions (10) form hollow spaces.

3. Plasterboard according to Claim 1, **characterized in that** the depressions (10) are filled with a preferably acoustically insulating material (11).

4. Plasterboard according to any of Claims 1 to 3, **characterized in that** the covering layer (9) is adhesively bonded or laminated onto the paperboard layers (2, 3).

## Revendications

1. Plaque de parement en plâtre comprenant une couche centrale (1) constituée de plâtre, qui est pourvue de part et d'autre d'une couche de carton (2, 3), la plaque de parement en plâtre présentant des saillies disposées régulièrement sur au moins un côté extérieur, dont les surfaces extérieures se situent dans un plan commun (5), l'une des couches de carton (2, 3) portant une couche de recouvrement (9) sur laquelle sont réalisées les saillies (8') et la couche de recouvrement (9) présentant un côté supérieur formant les saillies (8'), **caractérisée en ce que** la couche de recouvrement présente un côté inférieur relié à la couche de carton (2, 3) avec des renfoncements (10) correspondant aux saillies (8').

2. Plaque de parement en plâtre selon la revendication 1, **caractérisée en ce que** les renfoncements (10) forment des espaces creux.

3. Plaque de parement en plâtre selon la revendication 1, **caractérisée en ce que** les renfoncements (10) sont remplis d'un matériau (11) de préférence amortissant les sons.

4. Plaque de parement en plâtre selon l'une quelconque des revendications 1 à 3, **caractérisée en ce que** la couche de recouvrement (9) est collée ou contrecollée sur les couches de carton (2, 3).
